# EUROPEAN PATENT APPLICATION

(11) **EP 4 610 167 A1**
(43) Date of publication of application: **03.09.2025**
(21) Application number: 25154866.5
(22) Date of filing: 30.01.2025
(51) Int. Cl.: B64C 3/18, B64C 3/26, B29D 99/00, B64C 1/06, B64C 1/12, B29C 70/08, B29B 11/16, B29C 70/30

(54) **COMPOSITE AIRCRAFT COMPONENTS AND METHODS RELATING THERETO**

(30) Priority: 27.02.2024 GB 202402774
(71) Applicant: Airbus Operations Limited, Bristol BS34 7PA (GB)
(72) Inventor: BARNETT, Thomas, Bristol, BS34 7PA (GB)

(57) **Abstract**

An aircraft component (800) comprising a curved composite panel (700) having a stiffener support region (709) is disclosed. The stiffener support region (709) is substantially planar along a first direction (Y) of the panel (700) and is formed by a resininfused fibre preform (300). The composite panel (700) also comprises a curved region (707) which is curved along the first direction (Y) of the panel (700) and is formed by a further resin infused fibre preform (200). Methods of manufacturing the aircraft component (800) are also disclosed.

## Description

### BACKGROUND OF THE INVENTION

The present invention concerns composite aircraft components. More particularly, this invention relates to a composite aircraft component comprising a curved composite panel having a surface comprising a stiffener support region which is planar in at least a first direction. The present invention also relates to methods of manufacturing such composite aircraft components.

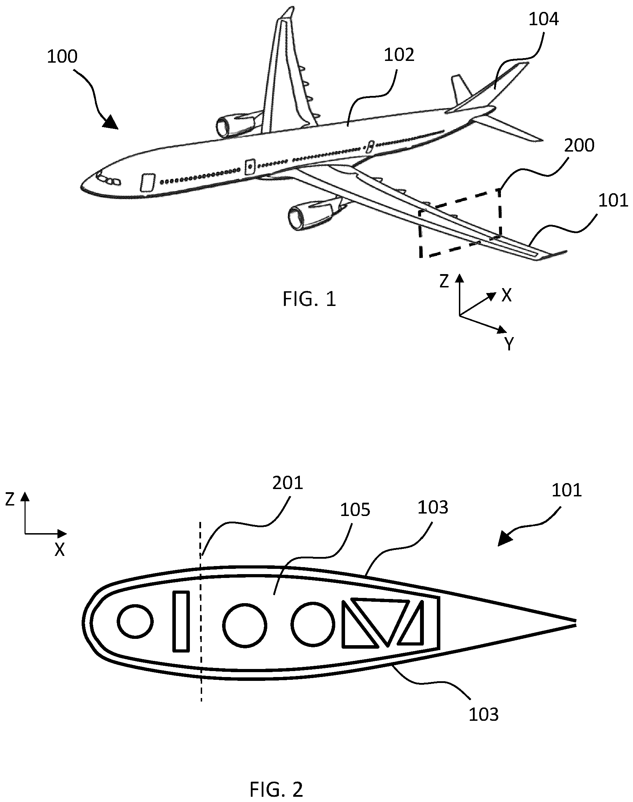

The wings 101, fuselage 102, empennage 104 and other parts of modern aircraft, such as the aircraft 100 shown in FIG.1, may comprise composite panels that are stiffened by structural stiffening elements. Such panels may have a complex double curvature and so have doubly curved surfaces to which it can be complicated to attach the structural stiffening elements.

For example, the wings 101 of the aircraft 100 comprise composite wing skins 103 which are stiffened by composite ribs 105, as can be seen in FIG. 2 which corresponds to the cross-section of the wing 101 at the location 200 indicated in FIG. 1. The composite wing skins 103 curve along the chordwise X-direction of the wing due to the aerodynamic profile of the wing. The composite wing skins 103 also curve along the spanwise Y-direction of the wing due to the cant and twist of the wing 101. The composite wing skins 103 therefore have a complex double curvature.

Construction of the type of wing 101 shown in FIG. 2 typically requires attaching at least one foot of the composite rib 105 to one of the wing skins 103. It is costly and time consuming to manufacture ribs having feet which are shaped to match the double curvature of the wing skin. Ribs may therefore be manufactured having feet which match the curve of the wing skin in the chordwise X-direction of the wing but which are planar along the spanwise Y-direction of the wing where the radius of curvature of the wing skin along the spanwise Y-direction of the wing skin is so large that the wing skin can be treated as approximately as planar over a distance equal to the width W of a stiffener foot.

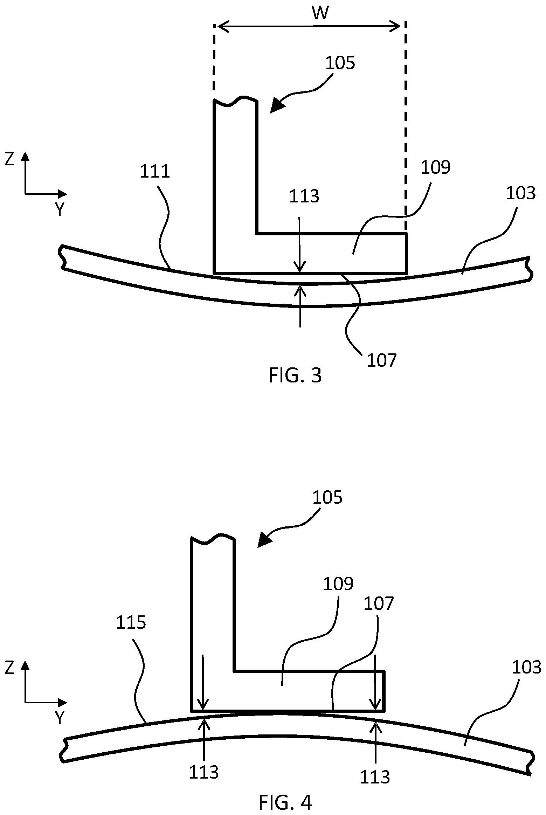

However, where a planar surface of a rib foot sits against a curved surface of the wing skin, there may be one or more gaps at the interface between the rib foot and the wing skin; this situation is illustrated in FIG. 3 and FIG. 4.

FIG. 3 shows the situation where a planar surface 107 of a foot 109 of a rib 105 is positioned for attachment upon a concave surface 111 of a wing skin 103. As can be seen, the mismatch between the concave surface 111 and the planar surface 107 results in there being a gap 113 formed between the concave surface 111 of the wing skin 103 and the planar surface 107 of the rib foot 109. FIG. 4 shows the situation where a planar surface 107 of a foot 109 of a rib 105 is positioned for attachment upon a convex surface 115 of a wing skin 103. As can be seen, the mismatch between the convex surface 115 and the planar surface 107 results in there being gaps 113 formed between the convex surface 111 of the wing skin 103 and the planar surface 107 of the rib foot 109.

Where a stiffener, such as a rib or a stringer, is being attached to a curved composite panel, the type of attachment method being used may prescribe a tolerance limit for the acceptable size of gap between the panel and stiffener. In some cases, this limit can be particularly small. For example, some one-way fasteners require that any such gaps are no more than about 0.05 mm in size. Where the size of the gap would exceed acceptable tolerance limits, the gap can be filled. For example, a shim may be placed between the stiffener and panel in order to fill or at least reduce the size of the gap. However, the process of filling such gaps is time consuming and costly.

Alternatively or additionally, a stiffener support surface may be machined into an as-cured curved panel to provide a planar surface to which a stiffener foot can be attached without there being gaps between the panel and the stiffener foot. However, machining of the as-cured panel is also time consuming and costly.

The present invention seeks to mitigate the above-mentioned problems. Alternatively or additionally, the present invention seeks to provide improved aircraft components comprising curved composite panels and methods of manufacturing such components.

### SUMMARY OF THE INVENTION

The present invention provides, according to a first aspect, a method of manufacturing an aircraft component comprising a curved composite panel having a surface comprising a stiffener support region. The method comprises placing a first fibre preform and at least a second fibre preform together in a mould to form a lay-up, the second fibre preform being arranged against a first surface of the first fibre preform, the first surface of the first fibre preform being curved along at least a first direction, infusing the first and second fibre preforms with resin and curing the resin to produce a curved composite panel with a surface comprising a stiffener support region arranged contiguously with a curved region. The stiffener support region is substantially planar along the first direction and is formed by the resin-infused second fibre preform, and the curved region is curved along the first direction and is formed by the resin infused first fibre preform.

The first fibre preform may be configured to form a panel portion of the composite panel. The second fibre preform may be configured to form a stiffener support portion of the composite panel. It will be appreciated that the first surface and curved region are curved along the first direction in the sense that they are curved when viewed in a first plane (e.g. in cross-section), and the stiffener support region is substantially planar along the first direction in the sense that it is substantially straight when viewed in the first plane. Prior to curing the resin, the first direction may be considered to be a first direction of the lay-up. Post-cure, the first direction may be considered to be a first direction of the composite panel, the first direction of the composite panel being aligned with the first direction of the lay-up (because the lay-up becomes the composite panel).

The first aspect of the invention provides a method of manufacturing a composite aircraft component comprising a curved composite panel having a surface with a stiffener support region that is planar along a first direction. The stiffener support region is therefore suitable for attaching to a stiffener having an attachment surface that is planar along a first direction of the stiffener so that there are no gaps formed between the surface of the composite panel and the stiffener attachment surface when their respective planar surfaces are aligned. For example, the attachment surface of the stiffener may be planar along a width direction of the stiffener and so the panel may be configured for attaching to the stiffener with the first direction of the panel aligned with the width direction of the stiffener.

The method involves a resin transfer moulding (RTM) process. RTM processes are known, and the skilled person will be aware of various suitable fibre and resin types for forming the composite component. For example, the fibre preforms may comprise carbon or glass fibres. The resin used may comprise RTM6 or HF620, for example.

The first fibre preform may be suitable for forming a panel (i.e. it may have in-plane dimensions which are much larger than its through-thickness dimensions). The first fibre preform may comprise a woven or non-crimp fabric.

The second fibre preform may comprise a first surface and a second surface arranged on opposing sides of the second fibre preform. The first surface may be curved along the first direction (of the lay-up/panel). The second surface may be substantially planar (straight) along the first direction (of the lay-up/panel). The method may comprise placing the first surface of the second fibre preform against the first surface of the first fibre preform. The second surface of the fibre preform may provide the stiffener support region.

The second fibre preform may comprise carbon fibres. The second fibre preform may comprise glass fibres. In some embodiments, the bulk of the second fibre preform may be formed by carbon fibres. For example, the second fibre preform may comprise carbon fibres and fibres of another type, such as glass fibres. In some embodiments a glass fibre layer may be provided at the second surface of the second fibre preform such that the glass fibre layer provides the stiffener support region. Certain types of metal (such as aluminium alloys) are vulnerable to galvanic corrosion when coupled to carbon fibre composites, as will be understood by the skilled the skilled person. A glass fibre stiffener support region may therefore be advantageous where the stiffener is metallic, as the glass fibre layer will space the metallic stiffener apart from the carbon fibre composite that forms the stiffener support region.

The first surface of the first fibre preform may be an upper or lower surface of the preform, depending on how the first and second fibre preforms are laid-up. Similarly, the first surface of the second fibre preform may be an upper or lower surface of the second preform, depending on how the first and second fibre preforms are laid-up. For example, the second fibre preform may be laid-up on top of the first fibre preform. Alternatively, the first fibre preform may be laid-up on top of the second fibre preform.

The first surface of the first fibre preform may be concave along the first direction (of the lay-up/panel). The first surface of the second fibre preform may be convex along the first direction (of the lay-up/panel). Alternatively, the first surface of the first fibre preform may be convex along the first direction (of the lay-up/panel). The first surface of the second fibre preform may be concave along the first direction (of the lay-up/panel).

The second surface of the second fibre preform may be curved along a second direction (of the lay-up/panel). The second direction (of the lay-up/panel) may be oriented perpendicular to the first direction. The second fibre preform may therefore have a surface which is planar along the first direction and curved along the second direction. The stiffener support surface may be curved along the second direction (of the lay-up/panel).

The curved composite panel may be configured to form a wing skin. The stiffener support region may be planar along a spanwise direction of the wing skin. The stiffener support region may be curved along a chordwise direction of the wing skin. It will be appreciated that the terms spanwise and chordwise refer directions of the wing skin when it forms part of a wing.

The method may include attaching a foot of a stiffener to the stiffener support region. The foot may comprise a surface which is planar along a first direction of the stiffener. The step of attaching the foot to the stiffener support region may comprise aligning the first direction of the foot with the first direction of the panel and placing the foot against the stiffener support region. The stiffener may be fastened, bonded, or otherwise attached to the stiffener support region using any known method of attachment.

According to a second aspect, the present invention provides an aircraft component comprising a curved composite panel formed at least in part by a fibre lay-up infused with a continuous matrix of resin. The lay-up comprises a first fibre preform and a second fibre preform, the first fibre preform being separate from the second fibre preform. The panel has a first surface comprising a stiffener support region and a curved region arranged contiguously with the stiffener support region. The stiffener support region is substantially planar along a first direction of the panel and is formed by the resin-infused second fibre preform. The curved region is curved along the first direction of the panel and is formed by the resin infused first fibre preform.

The second aspect of the invention provides a curved composite panel having a surface with a stiffener support region that is planar along a first direction. The stiffener support region is therefore suitable for attaching to a stiffener having an attachment surface that is planar along a first direction of the stiffener so that there are no gaps formed between the surface of the composite panel and the stiffener attachment surface when their respective planar surfaces are aligned. The composite panel comprises a lay-up infused by a continuous matrix of resin; in other words the lay-up is infused by a single body of resin, rather than, for example, the first fibre preform being infused with a first body of resin and cured and the second fibre preform being infused with a second, different body of resin, and then cured, and the cured resin-infused preforms then being co-bonded or co-cured in a further manufacturing step.

The surface of the panel may comprise a further curved region. The further curved region may be arranged contiguously with the stiffener support region such that the stiffener support region is between the curved region and the further curved region.

The composite panel may comprise a second surface on an opposite side of the panel to the first surface. The second surface may be continuously curved. The composite panel may comprise a second surface on an opposite side of the panel to the first surface, wherein the second surface is formed by the first fibre preform.

The second fibre preform may comprise a glass fibre layer arranged such that the stiffener support region is provided by the glass fibre layer. The glass fibre layer may be an outer layer of the second fibre preform. The bulk of the second fibre preform may be formed by carbon fibres with a glass fibre layer forming only an outer layer of the second fibre preform, the outer layer being configured to provide the stiffener support region. In some embodiments, the second fibre preform may comprise more than 90% carbon fibres. The remainder of the second fibre preform may be formed by some other type of fibre, for example, glass fibres. In other embodiments, the second fibre preform may comprise more than 90% glass fibres. The remainder of the second fibre preform may be formed by some other type of fibre, for example, carbon fibres.

The curved composite panel may be configured to form wing skin. The stiffener support region may be planar along a spanwise direction of the wing skin. The stiffener support region may be curved along a chordwise direction of the wing skin.

According to a third aspect, the present invention provides an aircraft comprising an aircraft component, the aircraft component either being manufactured according to the first aspect of the invention or being an aircraft component according to the second aspect of the invention.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
FIG. 1 shows a prior art aircraft having a fuselage, wings, empennage and other components comprising curved composite panels that are stiffened by structural stiffening elements;
FIG. 2 is a schematic cross-sectional view of the wing of the aircraft of FIG. 1, taken at the location 200 indicated in FIG. 1;
FIG. 3 is a schematic cross-sectional view of a rib sat against a curved wing skin with a gap therebetween due to the mismatch between a planar surface of the rib foot and a concave curved surface of the wing skin;
FIG. 4 is a schematic cross-sectional view of a rib sat against a curved wing skin with a gap therebetween due to the mismatch between a planar surface of the rib foot and a convex curved surface of the wing skin;
FIG. 5 is a schematic cross-sectional view in a Y-Z plane of first and second fibre preforms laid-up on a surface of a lower mould half, in accordance with a method according to a first embodiment of the invention (note that FIG. 5 corresponds to a cross-section taken along the line B shown in FIG. 6);
FIG. 6 is a schematic cross-sectional view in an X-Z plane of the arrangement shown in FIG. 5 (note that FIG. 6 corresponds to a cross-section taken along the line A shown in FIG. 5);
FIG. 7 corresponds to the arrangement shown in FIG. 5 with an upper mould half in place upon the first and second fibre preforms during a resin transfer moulding process;
FIG. 8 is a schematic cross-sectional view of a curved composite panel according to an embodiment of the present invention, the curved composite panel has a surface comprising a stiffener support region, which is planar in a first direction along the panel, and concave regions either side of the stiffener support region;
FIG. 9 shows the curved composite panel of FIG. 8 with a stiffener in place upon the stiffener support region of the panel;
FIG. 10 is a schematic cross-section in a Y-Z plane showing first and second fibre preforms laid-up on a surface of a lower mould half in accordance with a method according to a second embodiment of the invention;
FIG. 11 is a schematic cross-sectional view of a curved composite panel according to a further embodiment of the present invention, the curved composite panel has a surface comprising a stiffener support region, which is planar in a first direction along the panel, and convex regions either side of the stiffener support region, a stiffener having a foot with a surface that is planar along the first direction and which can be attached to the stiffener support portion is also shown; and
FIG. 12 is a schematic cross-sectional view of a curved composite panel according to another embodiment of the present invention, the curved composite panel is similar to that shown in FIG. 8 but differs in that the stiffener support region is provided by a glass fibre layer, whereas the remainder of the fibres forming the curved composite panel are carbon fibres.

### DETAILED DESCRIPTION

The present invention provides a method of manufacturing an aircraft component 800, 800', 800" comprising a curved composite panel 700, 700', 700". The aircraft component 800, 800', 800" may be for a wing, fuselage, empennage, or other part of an aircraft such as the aircraft 100 shown in FIG. 1. In particular, the curved composite panel 700, 700', 700" of the aircraft component 800, 800', 800" is formed with a surface having a stiffener support region that is planar in at least one direction of the panel, the stiffener support region of the panel thereby being configured for attachment with a stiffener or other structural member having an attachment surface that is planar in at least one direction.

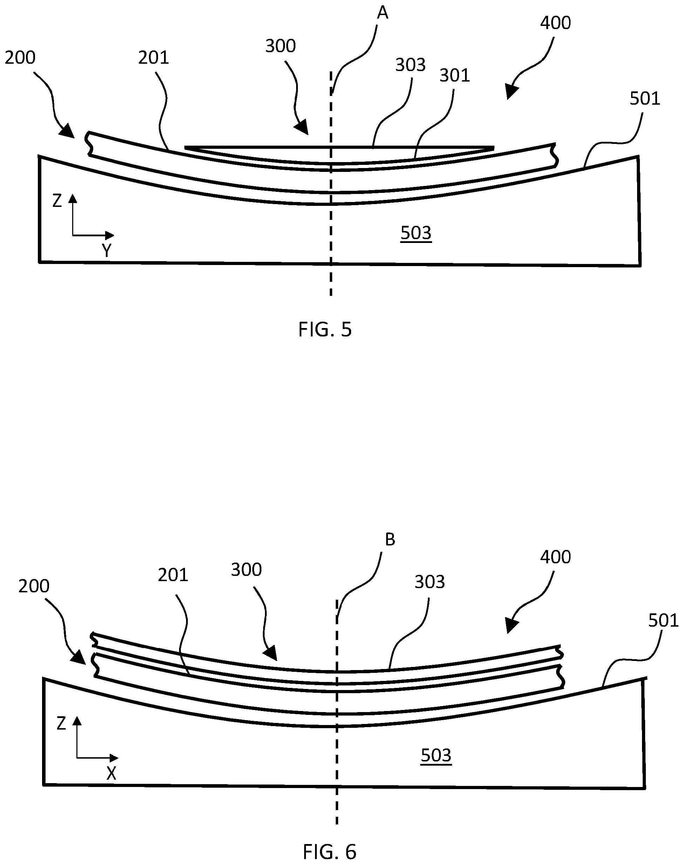

An example of a method of manufacturing an aircraft component according to a first embodiment of the invention is described below with reference to FIG. 5 to FIG. 9. It should be noted that the aircraft component comprises a curved composite panel that is manufactured using a resin transfer moulding (RTM) process. RTM processes will be well understood by the skilled person and, as such, description of steps of the RTM process have been omitted where they do not relate to the invention. Furthermore, the skilled person will of course be aware of many different types of fibre and resin suitable for forming a curved composite panel for an aircraft component.

A first fibre preform 200 for forming the bulk of a curved composite panel is laid-up on a tooling surface 501 of a lower mould half 503, as shown in the cross-sectional view of FIG. 5. The tooling surface 501 of the lower mould half 503 is concave along a Y-direction in a Y-Z plane, as indicated in FIG. 5, to hold the first fibre preform 200 in a curved shape having a concave upper surface 201. It should be noted that the panel being manufactured is doubly curved, so the tooling surface 501 of the lower mould half is also curved along an X-direction, which is perpendicular to the Y-direction, as illustrated in FIG. 6 which shows a cross-sectional view of the arrangement shown in FIG. 5 taken along the line A shown in FIG. 5 (conversely, FIG. 5 is a cross-sectional view of the arrangement shown in FIG. 6 taken along the line B shown in FIG. 6).

A second fibre preform 300 for providing a stiffener support surface is laid-up upon the concave upper surface 201 of the first fibre preform 200, the second fibre preform 300 having a convex lower surface 301 along the Y-direction in the Y-Z plane and a planar (i.e. straight) upper surface 303 along the Y-direction in the Y-Z plane. The upper surface 303 of the second fibre preform is configured to follow the curve of the first fibre preform along the X-direction in the X-Z plane, as can be seen in FIG. 6. As can be seen in FIG. 5, in the Y-direction, the convex lower surface 301 of the second fibre preform 300 is configured to sit against the concave upper surface 201 of the first fibre preform 200. The convex lower surface 301 of the second fibre preform 300 and the concave upper surface 201 of the first fibre preform 200 are formed with similar radii of curvature along the Y-direction. This allows the second fibre preform 300 to sit upon the concave surface 201 with a snug fit. Together, the first fibre preform 200 and the second fibre preform 300 form a lay-up 400.

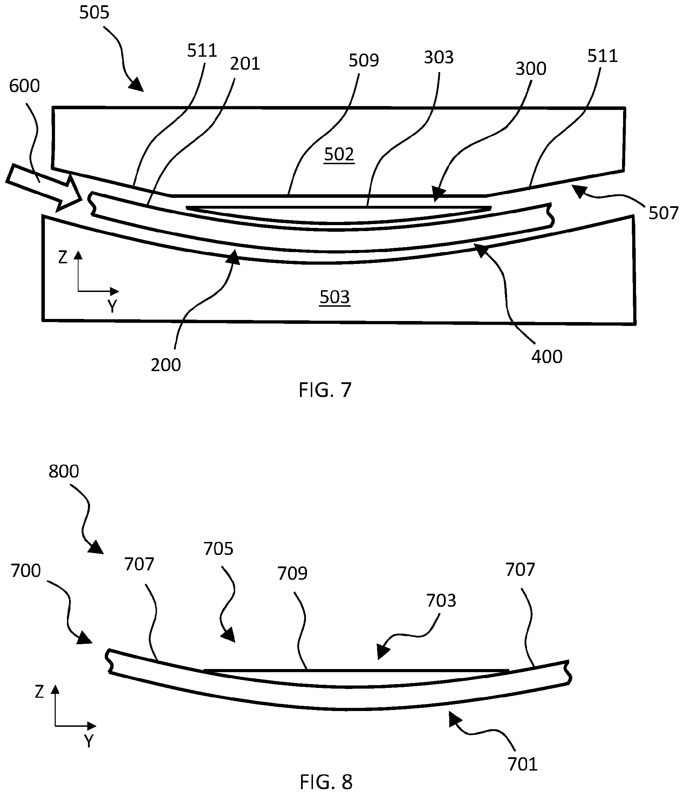

An upper mould half 502 is placed over the top of the lay-up 400, as shown in FIG. 7. The tooling surface 507 of the upper mould half 502 comprises a planar section 509 which is positioned against the planar upper surface 303 of the second fibre preform 300. The tooling surface 507 of the upper mould half also comprises curved sections 511 either side of the planar section 509. The curved sections 511 are positioned against the concave upper surface 201 of the first fibre preform 200.

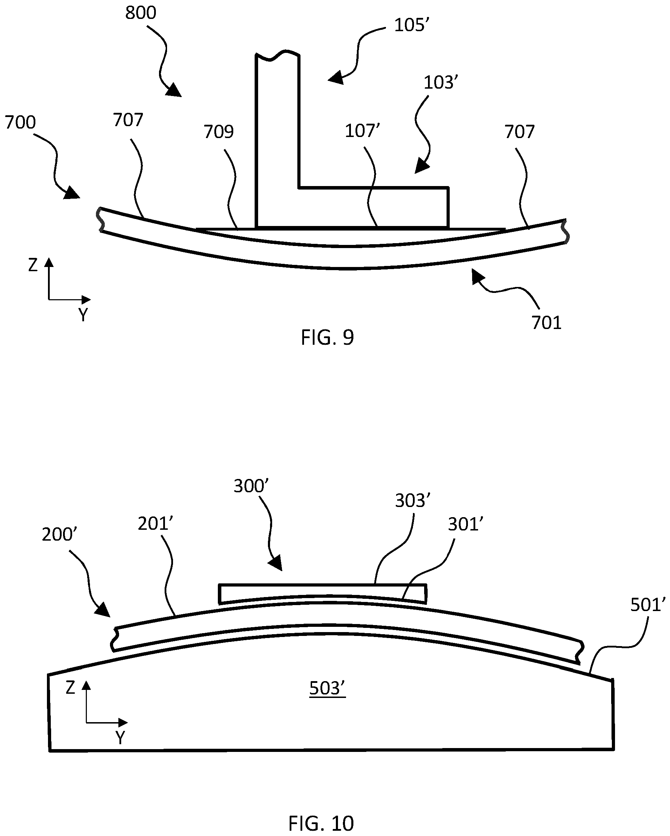

The lay-up 400 is then infused with resin 600 and cured in a manner that will be well understood by the skilled person to produce the cured composite panel 700 shown in FIG. 8. The composite panel 700 comprises a curved panel portion 701 and a stiffener support portion 703, the curved panel portion 701 being formed by the resin-infused first fibre preform 200 and the stiffener support portion 703 being formed by the resin-infused second fibre preform 300. As can be seen in FIG. 9, the stiffener support portion 703 provides the upper surface 705 of the composite panel 700 with a stiffener support region 709 that is planar along a first direction (Y-direction) so that a stiffener 105' having a foot 103' with a planar surface 107' that is planar along the first direction can be attached to the stiffener support portion 703 with no gaps between the planar surface 107' of the stiffener foot 103' and the stiffener support region 709 of the curved composite panel 700. Either side of the stiffener support portion 703 the upper surface 705 of the composite panel 700 is formed by curved surface regions 707 due to the upper surface 705 being provided by the curved panel portion 701 of the composite panel 700.

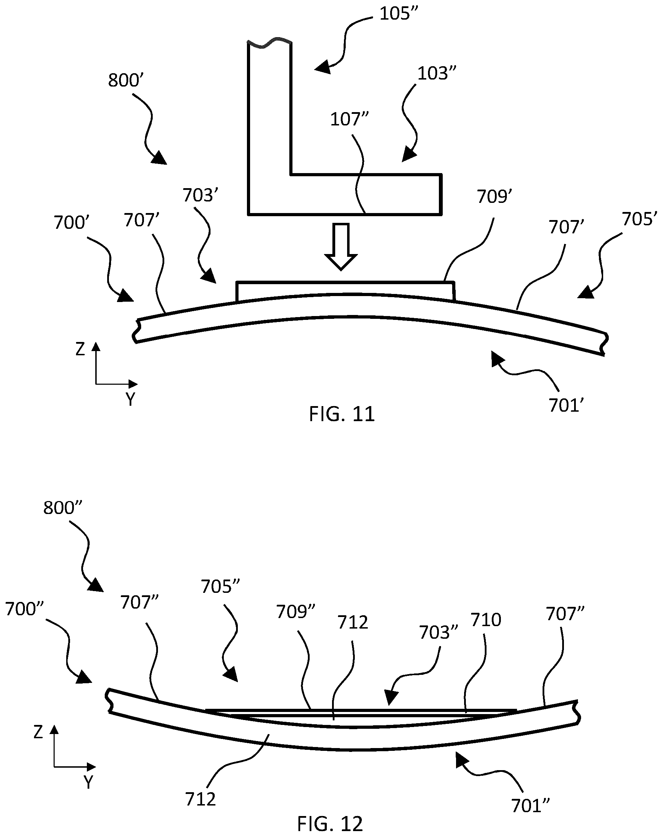

The method of the first embodiment of the invention described above involves using an RTM process to produce a curved composite panel 700 having a stiffener support portion 703 which provides a planar stiffener support region 709 on a surface 705 of the curved composite panel 700 that would be concave in the absence of the stiffener support portion 703. A method according to a second embodiment of the invention is described below with reference to FIG. 10 and FIG. 11. The method according to the second embodiment of the invention is similar to the method according to the first embodiment of the invention and can be used to produce a curved composite panel 700' having a stiffener support portion 703' which provides a planar stiffener support region 709' on a surface 705' of the curved composite panel 700' that would be convex in the absence of the stiffener support portion 703' .

Similar to the method according to the first embodiment of the invention, a first fibre preform 200' for forming the bulk of a curved composite panel is laid-up on a tooling surface 501' of a lower mould half 503'. In this case the tooling surface 501' of the lower mould half 503' is convex along a Y-direction, as indicated in FIG. 10, to hold the first fibre preform 200' in a curved shape having a convex upper surface 201'. A second fibre preform 300' for providing a stiffener support surface is then laid-up upon the convex upper surface 201' of the first fibre preform 200', the second fibre preform 300' having a concave lower surface 301' along the Y-direction and a planar upper surface 303' along the Y-direction. The concave lower surface 301' of the second fibre preform 300' and the convex upper surface 201' of the first fibre preform 200' are formed with similar radii of curvature along the Y-direction. This allows the second fibre preform 300' to sit upon the concave surface 201' with a snug fit. Together, the first fibre preform 200' and the second fibre preform 300' form a lay-up 400'.

An upper mould half is then placed over the top of the lay-up 400' and the lay-up 400' is infused with resin 600 and cured in a manner that will be well understood by the skilled person to produce the cured composite panel 700' shown in FIG. 11.

The composite panel 700' produced according to the method of the second embodiment of the invention comprises a curved panel portion 701' and a stiffener support portion 703', the curved panel portion 701' being formed by the resin-infused first fibre preform 200' and the stiffener support portion 703' being formed by the resin-infused second fibre preform 300'. The stiffener support portion 703' provides the upper surface 705' of the composite panel 700' with a stiffener support region 709' that is planar along a first direction so that a stiffener 105" having a foot 103" with a planar surface 107" that is planar along the first direction can be attached to the stiffener support portion 703' with no gaps between the planar surface 107" of the stiffener foot 103" and the stiffener support region 709' of the curved composite panel 700'. Either side of the stiffener support portion 703', the upper surface 705' of the composite panel 700' is formed by convex curved surface regions 707' due to the upper surface 705' being provided by the curved panel portion 701' of the composite panel 700'.

A composite panel 700" which is similar to and manufactured in a similar way to the composite panel 700 described above is shown in FIG. 12. Like the composite panel 700, the composite panel 700" comprises a curved panel portion 701" and a stiffener support portion 703", the curved panel portion 701" being formed by a resin-infused first fibre preform and the stiffener support portion 703" being formed by a resin-infused second fibre preform. The stiffener support portion 703" provides the upper surface 705" of the composite panel 700" with a stiffener support region 709" that is planar along a first direction (Y-direction) so that a stiffener having a foot with a surface that is planar along the first direction can be attached to the stiffener support portion 703" with no gaps between the planar surface of the stiffener foot and the stiffener support region 709" of the curved composite panel 700". Either side of the stiffener support portion 703" the upper surface 705" of the composite panel 700" is formed by curved surface regions 707" due to the upper surface 705" being provided by the curved panel portion 701" of the composite panel 700"

In this case, the second fibre preform is provided with an outer glass fibre layer such that the glass fibre layer 710 forms the stiffener support region 709" of the curved composite panel 700". The remainder of the second fibre preform which forms the stiffener support portion 703", and the curved panel portion 701", are formed from carbon fibre 712. A glass fibre stiffener support region may be particularly advantageous where a metallic stiffener is being attached to the stiffener support region because some metals, such as aluminium alloys, are particularly vulnerable to galvanic corrosion when in contact with carbon fibres; the glass fibre layer therefore spaces the metallic stiffener apart from the carbon fibres. In some embodiments, the entirety of the stiffener support portion may of course be formed from glass fibre.

Whilst the present invention has been described and illustrated with reference to particular embodiments, it will be appreciated by those of ordinary skill in the art that the invention lends itself to many different variations not specifically illustrated herein. For example, while the composite panels 700, 700' produced according to the methods described above are doubly curved, the invention could of course be used to produce a composite panel which is curved only in a single direction, and which therefore would have a surface comprising a stiffener support region which is planar in two directions (i.e. orthogonal directions) of the panel. Furthermore, it will be readily understood that the second fibre preform could be shaped to provide a doubly curved composite panels having a stiffener support region which is planar in two directions (i.e. orthogonal directions) of the panel. It should be understood that the method according to the invention could in principle be used to manufacture a curved composite panel for use in any aircraft component requiring a curved composite panel having a planar stiffener support region.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of manufacturing an aircraft component comprising a curved composite panel having a surface comprising a stiffener support region, the method comprising:
- placing a first fibre preform and at least a second fibre preform together in a mould to form a lay-up, the first fibre preform comprising a first surface which is curved along at least a first direction, the second fibre preform being arranged against the first surface of the first fibre preform,
- infusing the first and second fibre preforms with resin and curing the resin to produce the curved composite panel with a surface comprising a stiffener support region arranged contiguously with a curved region,
wherein the stiffener support region is substantially planar along the first direction and is formed by the resin-infused second fibre preform, and the curved region is curved along the first direction and is formed by the resin infused first fibre preform.

2. A method according to claim 1, wherein the second fibre preform comprises a first surface and a second surface, the first and second surfaces are arranged on opposing sides of the second fibre preform, the first surface is curved along the first direction, the second surface is substantially planar along the first direction, and the method comprises placing the first surface of the second fibre preform against the first surface of the first fibre preform.

3. A method according to claim 2, wherein the first surface of the first fibre preform is concave along the first direction, and the first surface of the second fibre preform is convex along the first direction.

4. A method according to claim 2, wherein the first surface of the first fibre preform is convex along the first direction, and the first surface of the second fibre preform is concave along the first direction.

5. A method according to any preceding claim, wherein the second surface of the second fibre preform is curved along a second direction, the second direction being oriented perpendicular to the first direction.

6. A method according to any preceding claim, wherein the curved composite panel is configured to form wing skin, the stiffener support region is planar along a spanwise direction of the wing skin, and the stiffener support region is curved along a chordwise direction of the wing skin.

7. A method according to any preceding claim further comprising attaching a foot of a stiffener to the stiffener support region, the foot comprising a surface which is planar along a first direction of the stiffener, the step of attaching the foot to the stiffener support region comprising aligning the first direction of the stiffener with the first direction of the panel and placing the foot against the stiffener support region.

8. An aircraft component comprising a curved composite panel formed at least in part by a fibre lay-up infused with a continuous matrix of resin, the lay-up comprising a first fibre preform and a second fibre preform, the first fibre preform being separate from the second fibre preform, wherein the panel has a first surface comprising a stiffener support region and a curved region arranged contiguously with the stiffener support region, the stiffener support region is substantially planar along a first direction of the panel and is formed by the resin-infused second fibre preform, the curved region is curved along the first direction of the panel and is formed by the resin infused first fibre preform.

9. An aircraft component according to claim 8, wherein the first surface of the panel comprises a further curved region, the further curved region being arranged contiguously with the stiffener support region such that the stiffener support region is between the curved region and the further curved region.

10. An aircraft component according to claim 9, wherein the composite panel comprises a second surface on an opposite side of the panel to the first surface, wherein the second surface is continuously curved.

11. An aircraft component according to any of claims 8 to 10, wherein the composite panel comprises a second surface on an opposite side of the panel to the first surface, wherein the second surface is formed by the first fibre preform.

12. An aircraft component according to any of claims 8 to 11, wherein the second fibre preform comprises a glass fibre layer arranged such that the stiffener support region is provided by the glass fibre layer.

13. An aircraft component according to any of claims 8 to 12, wherein the curved composite panel is configured to form wing skin, the stiffener support region is planar along a spanwise direction of the wing skin, and the stiffener support region is curved along a chordwise direction of the wing skin.

14. An aircraft comprising an aircraft component according to any of claims 8 to 13 or an aircraft component manufactured using the method of any of claims 1 to 7.
